# EUROPEAN PATENT SPECIFICATION

(11) **EP 2 713 265 B1**
(45) Date of publication and mention of the grant of the patent: **06.05.2020**
(21) Application number: 13185113.1
(22) Date of filing: 19.09.2013
(51) Int. Cl.: G06F 3/12, G06Q 20/04, G06Q 20/20, G06Q 20/32

(54) **Print control device, printer, and control method of a print control device**
Drucksteuerungsvorrichtung, Drucker, und Steuerungsverfahren für eine Drucksteuerungsvorrichtung
Dispositif de commande d'impression, imprimante et procédé de commande d'un dispositif de commande d'impression

(30) Priority: 28.09.2012 JP 2012216974
(43) Date of publication of application: 02.04.2014
(73) Proprietor: Seiko Epson Corporation, Tokyo 163-0811 (JP)
(72) Inventor: Yokoyama, Kazuyuki, Suwa-shi, Nagano 392-8502 (JP)
(74) Representative: MERH-IP Matias Erny Reichl Hoffmann Patentanwälte PartG mbB

(56) References cited:
- EP-A2- 1 006 499
- US-A1- 2007 182 978
- US-A1- 2007 288 322
- US-A1- 2009 323 099
- US-A1- 2011 099 073
- US-A1- 2012 084 391

## Description

### BACKGROUND

### 1. Technical Field

The present invention relates to a print control device that executes a receipt printing process to produce a receipt, a printer, and a control method of the print control device.

### 2. Related Art

Electronic receipt systems that produce electronic receipts digitizing the information recorded on a receipt are known from the literature. See, for example, Japanese Unexamined Patent Appl. Pub. JP-A-2005-14164.9. Methods of producing an electronic receipt include sending the electronic receipt directly to the customer's personal computer, cell phone or mobile device, or IC card, for example, by e-mail or short-range wireless communication, as well as the customer accessing a particular web (Internet) address. Irrespective of the method used, electronic receipt systems generally save the electronic receipt data in a specific text format or a specific image file format. The format is typically specific to the retailer or the vendor that developed the electronic receipt system.

While not relating to electronic receipt systems that produce electronic receipts digitizing the information recorded on a receipt, US 2009/0323099 A1 relates to a printing method that allows the user to print a document and generate an output file from it in a desired image file format and save the file for late use. The user opens a document using an application, and issues a print request using a print dialog box. From the print dialog box, the user chooses to set printing preferences. The print preferences dialog box includes an "output file" tab allowing the user to specify whether an output file is to be generated, specify an output file format, specify a destination for saving the output file, and specify whether hard copies of the document are to be printed on the printer.

US 2009/0323099 A1 relates to print driver control which provides or acquires print-related data, can store data about a destination folder for output files, to instruct a print process based on the acquired/provided print-related data and to generate an output file to be stored to the destination folder when the print process is executed.

EP 1 006 499 A2 relates to POS system including an NC (network computer) serving as a POS terminal, a method of controlling such a POS system, and an information storage medium. The POS system includes a POS terminal, a printer connected to the POS terminal, and a store controller connected to the POS terminal. The POS terminal includes data generation means for generating transaction data, first data transmission means for transmitting the data generated by the transaction data generation means to the printer, and second data transmission means for transmitting the transaction data generated by the data generation means to the store controller. The printer includes first reception means for receiving the transaction data transmitted by the first data transmission means, and first nonvolatile storage means for storing the transaction data received via the first reception means. The store controller includes second reception means for receiving the transaction data transmitted by the second data transmission means, and second nonvolatile storage means for storing the transaction data received via the second reception means.

US 2007/0288322 A1 relates to a POS terminal, that comprises a CPU, a recording unit and a printer interface amongst others. A printer is removably connected to the printer interface. The recording unit of the POS terminal has a merchandise-information managing area that stores a merchandise-information table. The merchandise-information table contains additional information about merchandise items including the names of the merchandise items, the prices thereof, and merchandise-information accessing data. The merchandise-information accessing data is used to link the POS terminal to a site on the Internet, at which the merchandise information associated with this data can be acquired. The merchandise-information accessing data are used to link a customer's portable terminal to any site the merchandise-information providing server provides.

The electronic receipt information stored by the seller is valuable information that can be used to analyze sales information as well as the purchasing activity of customers. However, if the format used to store electronic receipts differs with each seller or vendor as is typical in existing electronic receipt systems, analyzing the electronic receipt information that is maintained by plural retailers or vendors is difficult.

### SUMMARY

According to the present invention, there is provided and proposed a print control device according to claim 1, a printer according to claim 5, and a print control method according to claim 6. Dependent claims relate to preferred exemplary embodiments of the present invention.

A print control device, a printer, and a control method of a print control device according to the invention enable easily analyzing sales information and customer purchasing activity using electronic receipt information managed by multiple retailers and system vendors.

One aspect of the invention is a print control device connected to a POS terminal through a dedicated cable or LAN, connected to a printer and a management server, and including: a receipt data acquisition unit configured to acquire receipt data showing the result of a transaction process from a POS terminal, wherein the receipt data is one of receipt data written in a markup language, and print data written in a language different from the markup language. The print control device further comprises a language conversion unit configured to, when the receipt data acquired by the receipt data acquisition unit is written in the language different from the markup language, convert the receipt data written in the different language to a receipt data written in the markup language; an address storage unit configured to store an address of the management server; a paper receipt production unit configured to execute a paper receipt production process based on the receipt data acquired by the receipt data acquisition unit and to generate a paper receipt data with command that can be interpreted by the printer, the paper receipt data being written in the markup language or being written in the language different from the markup language according to printer specification; a transmission unit configured to send the paper receipt data to the printer; a receipt ID generating unit configured to analyze the receipt data acquired by the receipt data acquisition unit and to generate a receipt ID identifying the receipt data; a receipt ID supply unit configured to supply the receipt ID to a mobile device; a receipt ID assignment unit configured to generate assigned receipt data by assigning the receipt ID to the receipt data written in the markup language; and an output unit configured to output the assigned receipt data to the address of the management server when the paper receipt production unit executes the paper receipt production process.

Another aspect of the invention is a control method of a print control device connected to a POS terminal through a dedicated cable or LAN and connected to a printer and a management server, the control method including steps of: acquiring receipt data showing the result of a transaction process from the POS terminal, wherein the receipt data is one of receipt data written in markup language, and print data written in a language different from the markup language; executing a paper receipt production process based on the acquired receipt data.

The paper receipt production process comprises the steps of: converting the receipt data, when the acquired receipt data is written in the language different from the markup language, to a receipt data written in the markup language; generating a paper receipt data with command that can be interpreted by the printer, the paper receipt data being written in the markup language or written in the language different from the markup language according to printer specification; sending the paper receipt data to the printer; analyzing the acquired receipt data and generating a receipt ID identifying the receipt data; supplying the receipt ID to a mobile device; generating assigned receipt data by assigning the receipt ID to the receipt data written in the markup language; and outputting the assigned receipt data to a previously stored address of the management server.

These aspects of the invention output the acquired receipt data to the address of an external device in markup language, thereby enabling collecting receipt data managed by multiple retailers and vendors in a common language on an external device. Sales information and customer purchasing activity can therefore be analyzed easily. Furthermore, because a markup language that is independent of the operating system and application environment is used as the common language, the receipt data can be easily manipulated, including easily editing the data using style sheets. Furthermore, because the receipt data is collected in a common language, there is no need to modify the transaction process unit (such as a POS terminal) that generates the receipt data, and the system can be adopted at a low cost.

Examples of a markup language include, for example, XML (Extensible Markup Language), HTML (Extensible HyperText Markup Language), SGML (Standard Generalized Markup Language), and RTF (Rich Text Format).

The receipt data acquired by the receipt data acquisition unit may be written in markup language or a language other than markup language.

The address of external device could be a single address or addresses for multiple devices. If addresses for multiple devices are stored, all acquired receipt data could be always sent to the plural addresses, or the addressee could be changed conditionally upon the time or day of the week that the receipt data is acquired. The addressee could also be changed according to the result of analyzing the receipt data (according to the transaction total, purchased product, operator ID, or customer ID, for example).

A paper receipt means a receipt that is printed by a printer.

An electronic receipt means a receipt that contains the transaction information (such as the transaction total, purchased products, and price) as digital data. An electronic receipt also includes mobile receipts that can be sent directly by e-mail or short-range radio communication, for example, to the customer's home PC, mobile device, or IC card, and web receipts that can be viewed by the customer accessing a particular web address.

The invention can also be provided as a program that causes a computer to function as parts of the print control device, or a program that causes a computer to execute the control method of a print control device. These programs can also be used as a printer driver.

As an exemplarily embodiment, a print control device may also have a language conversion unit configured to, when the receipt data acquired by the receipt data acquisition unit is written in a language different from the markup language, convert the receipt data written in the different language to receipt data written in the markup language.

By having a language converter, this aspect of the invention can output receipt data in markup language to the external device even when the receipt data acquired by the receipt data acquisition unit is written in a specific language other than markup language.

A print control device according to another aspect of the invention preferably also has a customer ID acquisition unit configured to acquire a customer ID identifying a customer; and a customer ID assignment unit configured to assign the customer ID to the receipt data written in the markup language or to receipt data written in a language different from the markup language.

This aspect of the invention acquires a customer ID and assigns the customer ID to the receipt data, thereby enabling the customer to view her personal purchasing history when the electronic receipt is produced as a web receipt, for example. Viewing is thus simplified, and security is improved because other people cannot view the receipts. The purchasing activity of individual users can also be easily analyzed from the receipt data collected in the external device because the customer ID identifies a particular individual.

The customer ID acquisition unit could acquire a customer ID from a mobile device or IC card owned by the customer. In this implementation, the IC card can preferably be used at multiple stores. The customer ID could also be a member number or e-mail address stored in a mobile device or IC card, or an ID unique to the IC chip (such as the chip ID).

A print control device according to another aspect of the invention preferably also has a receipt ID generating unit configured to analyze the receipt data acquired by the receipt data acquisition unit and to generate a receipt ID identifying the receipt data; a receipt ID supply unit configured to supply the receipt ID to the customer; and a receipt ID assignment unit configured to assign the receipt ID to the receipt data written in the markup language or to receipt data written in a language different from the markup language.

This aspect of the invention generates a receipt ID, includes this receipt ID in the receipt data, and provides the receipt ID to the customer. The customer can therefore view a particular receipt over a network when a web receipt is produced as the electronic receipt. As a result, the customer can easily view a particular web receipt without providing personal information such as a customer ID or e-mail address.

The receipt ID generating unit generates a receipt ID that can uniquely identify a single receipt based on specific items contained in the receipt (such as the receipt date, store identifier, POS terminal ID, and transaction number).

The receipt ID supply unit may also supply the receipt ID to the customer's PC, mobile device, or IC card, for example.

A print control device according to another aspect of the invention preferably also has a style sheet storage unit configured to store a style sheet describing a format for a paper receipt; and the paper receipt production unit is configured to convert receipt data written in markup language based on the style sheet, and to generate print data for a paper receipt.

This aspect of the invention can easily generate data for a paper receipt by converting receipt data in a markup language based on a style sheet.

Another aspect of the invention is a printer that has a receipt data acquisition unit configured to acquire receipt data showing the result of a transaction process from a POS terminal; an address storage unit configured to store an address of an external device; a paper receipt production unit configured to execute a paper receipt production process based on the receipt data acquired by the receipt data acquisition unit, and to generate paper receipt print data; a transmission unit (81) configured to send a paper receipt data with command that can be interpreted by a printer (3) when the paper receipt production unit executes the receipt production process; an output unit configured to output the receipt data in markup language to the address of the external device when the paper receipt production unit executes the receipt production process; and a print unit configured to print the print data output from the paper receipt production unit on a print medium.

Preferably, the printer also has an electronic receipt production unit configured to execute an electronic receipt production process based on the receipt data acquired by the receipt data acquisition unit; and the output unit is configured to output the receipt data in markup language to the address of the external device when the paper receipt production unit or the electronic receipt production unit executes the receipt production process.

This aspect of the invention enables effectively using electronic receipt information managed by plural retailers or vendors by incorporating the printer according to the invention.

In this aspect of the invention the receipt data is acquired from a POS terminal, for example.

The electronic receipt production unit could also functions as the processor that produces electronic receipts, and send receipt data in markup language to a specific address (customer PC, mobile device, IC card, or web server for producing web receipts, for example).

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a block diagram of a receipt processing system according to a first embodiment of the invention.
FIG. 2 is a function block diagram of the receipt processing system according to the first embodiment of the invention.
FIG. 3 shows an example of receipt data written in XML.
FIG. 4 is a flow chart of a print control device process.
FIG. 5 is a flow chart of the mobile device process.
FIG. 6 is a flow chart of the management server process.
FIG. 7 is a function block diagram of a receipt processing system according to a second embodiment of the invention.
FIG. 8 shows the configuration of a receipt processing system according to a third embodiment of the invention.

### DESCRIPTION OF EMBODIMENTS

Preferred embodiments of the present invention are described below with reference to the accompanying figures.

This embodiment describes a configuration having a print control device 10 disposed between a POS terminal 1 and a printer 3. XML (Extensible Markup Language) is used in this embodiment as an example of a markup language.

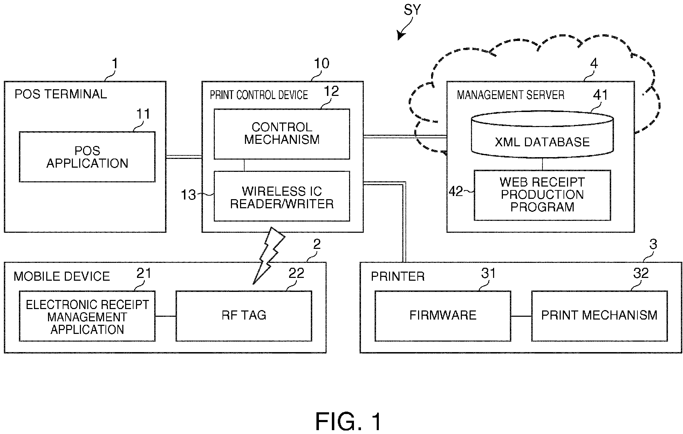

FIG. 1 is a block diagram showing the configuration of a receipt processing system SY according to a preferred embodiment of the invention. The receipt processing system SY includes a POS (point-of-sale) terminal 1, print control device 10, and printer 3 installed in a retail business, a mobile device 2 belonging to (carried by) a customer, and a management server 4 (external device) in the cloud (on the Internet or other computer network). The POS terminal 1 and print control device 10, and the print control device 10 and printer 3, are connected to each other through a dedicated cable or LAN, for example. The print control device 10 and management server 4 are connected over a computer network. Note that the print control device 10 and management server 4 are connected 1:1 in the figure, but they could be connected many:1, 1:many, or many:many.

The POS terminal 1 is a dedicated terminal, a personal computer (PC below), or a tablet, for example, and has a POS application 11. The POS application 11 controls a specific transaction process (including inputting product information and prices, calculating a transaction total, and producing receipt data).

The print control device 10 is a dedicated terminal, PC, or tablet, for example, and includes a control mechanism 12 and wireless IC reader/writer 13. The control mechanism 12 produces paper receipts and electronic receipts, and uploads receipt data to the management server 4.

The wireless IC reader/writer 13 communicates with an RF tag 22 built in to the mobile device 2. The wireless IC reader/writer 13 is used primarily to transmit electronic receipts and receive a unique ID from an RF tag 22 in this embodiment. The wireless IC reader/writer 13 uses the NFC (Near Field Communication (R)) protocol in this embodiment, but the invention is not so limited and the wireless IC reader/writer 13 could be configured to communicate using another short-range wireless communication standard (contactless communication standard) or an infrared communication standard, for example.

The mobile device 2 could be a notebook computer, a smartphone or small tablet device, or a cell phone, for example, and has an electronic receipt management application 21 and an RF tag 22. The electronic receipt management application 21 is downloaded from an application server not shown, and used to manage electronic receipts.

An electronic receipt as used herein includes mobile receipts that can be received directly from the print control device 10 (wireless IC reader/writer 13) at the point of sale, and web receipts that the customer can view by accessing a specific web address.

The electronic receipt management application 21 acquires receipt data, generates and stores mobile receipts, and can enable or disable mobile receipt and web receipt production as described in further detail below.

The RF tag 22 is an NFC tag (R), for example, and has a wireless IC chip and antenna (both not shown). The antenna receives and transmits signals to the wireless IC reader/writer 13. The wireless IC chip controls sending and receiving, and stores a chip ID. The chip ID is an ID unique to the wireless IC chip (unique ID for the RF tag 22), and in this embodiment is used as an ID that identifies a particular customer (below, customer ID).

The printer 3 is a receipt printer that produces a paper receipt, and has firmware 31 and a print mechanism 32. The firmware 31 contains data and programs run by the printer 3. The print mechanism 32 includes a printhead, paper conveyance mechanism, and paper cutter mechanism.

The management server 4 stores an XML (markup language) database 41 and a web receipt production program 42. The XML database 41 stores receipt data output from the print control device 10 in the XML language (markup language). The receipt data describes attributes (receipt attributes) of the receipt produced as a paper receipt or electronic receipt, is collected from a plurality of print control devices 10 (plural stores), and is used to analyze sales data and customer purchasing activity.

The web receipt production program 42 controls a web receipt production process. More specifically, the program determines whether or not to produce a web receipt, produces data for a web receipt, and publishes the web receipt as described below in detail.

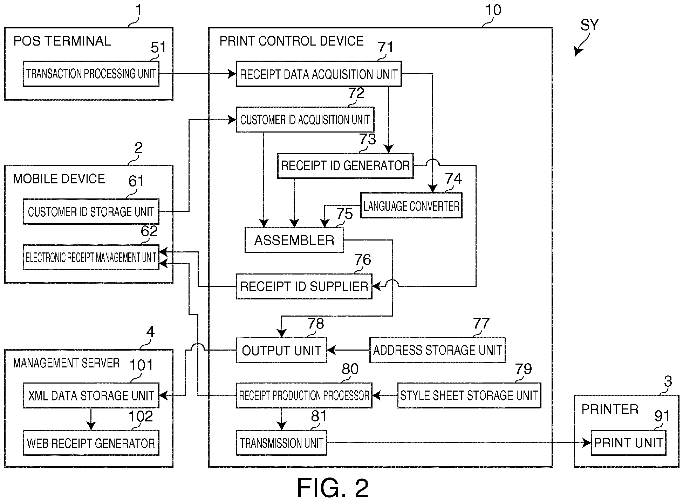

The functional configuration of the receipt processing system SY is described next with reference to FIG. 2.

The main part of the POS terminal 1 is a transaction processing unit 51. The transaction processing unit 51 generates receipt data showing the result of the transaction process. The receipt data may be print data for a paper receipt (non-XML data), receipt attribute data without print style information (non-XML language), or XML data. If written in XML, POSLog is preferably used as the XML format.

The main parts of the mobile device 2 include a customer ID storage unit 61 and electronic receipt management unit 62. The customer ID storage unit 61 is rendered by the RF tag 22 (wireless IC chip), and stores a customer ID identifying a unique customer.

The electronic receipt management unit 62 is rendered by the electronic receipt management application 21, and manages electronic receipts. For example, when XML receipt data is received from the print control device 10, the electronic receipt management unit 62 generates and stores data for a mobile receipt based on a previously stored mobile receipt style sheet. The mobile receipt style sheet describes the format of the mobile receipt, and is written in markup language (such as XSL (Extensible Stylesheet Language)). If the receipt data is written in XHTML (Extensible HyperText Markup Language), the style sheet could be written in a cascading style sheet language such as CSS (Cascading Style Sheets).

The electronic receipt management unit 62 displays the mobile receipt on the display (not shown in the figure) of the mobile device 2 based on the mobile receipt data generated by the print control device 10. Mobile receipts can also be sorted by the user by date or store, for example. The electronic receipt management unit 62 acquires and saves a receipt ID for displaying a web receipt (identifying a particular receipt) for the customer from the print control device 10 (receipt ID supplier 76). The electronic receipt management unit 62 can be configured whether or not to produce mobile receipts and web receipts. The electronic receipt management unit 62 sends the information about whether or not to produce a mobile receipt with the customer ID to the print control device 10. The web receipt production information is also sent with the customer ID over the Internet, for example, to the management server 4 (web receipt generator 102).

The main parts of the print control device 10 include a receipt data acquisition unit 71, customer ID acquisition unit 72, receipt ID generator 73, language converter 74, assembler 75 (customer ID assignment unit, receipt ID assignment unit), receipt ID supplier 76, address storage unit 77, output unit 78, style sheet storage unit 79, receipt production processor 80 (paper receipt production processor, electronic receipt production processor), and transmission unit 81.

The receipt data acquisition unit 71 gets receipt data from the POS terminal 1 (transaction processing unit 51). The customer ID acquisition unit 72 acquires a customer ID from the mobile device 2 (customer ID storage unit 61) using the wireless IC reader/writer 13.

The receipt ID generator 73 analyzes the receipt data acquired by the receipt data acquisition unit 71, and generates a receipt ID identifying the receipt data. More specifically, a receipt ID that can uniquely identify a single receipt is generated by digitizing specific items contained in the receipt data (such as the receipt date, store identifier, POS terminal ID, and transaction number) according to a specific algorithm. The receipt ID is used to identify a particular receipt when the customer views a web receipt.

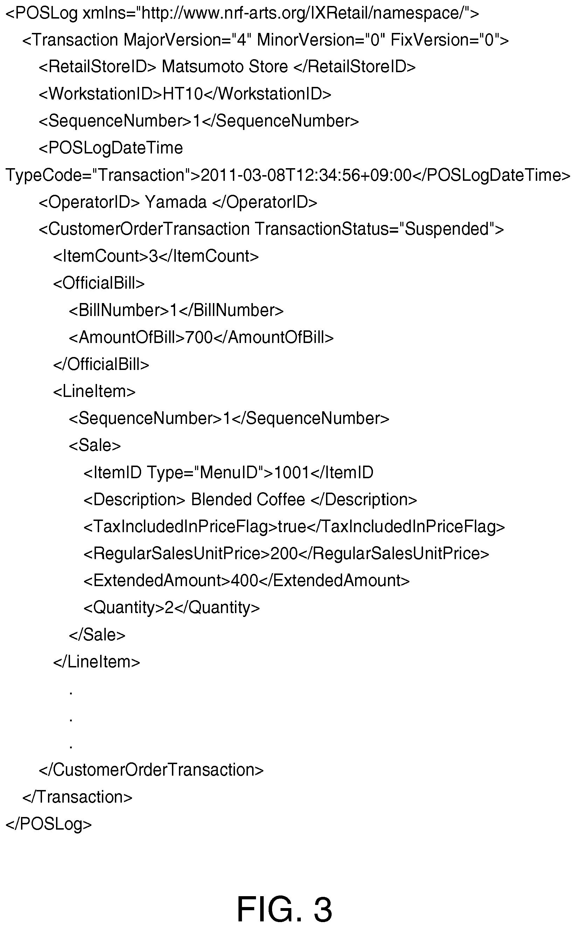

When the receipt data acquired by the receipt data acquisition unit 71 is written in a specific language other than XML, the language converter 74 converts the receipt data according to a previously stored specific conversion format from the specific language to XML (POSLog). FIG. 3 shows an example of receipt written in XML. As shown in the figure, XML receipt data converted according to a specific conversion format is data describing receipt attributes and not printing style. The receipt attributes in this example include store information, a sequence number, POS terminal ID, operator ID, item count (number of products), line items (product name), item ID (product ID), price, and transaction amount.

The assembler 75 assembles the customer ID acquired by the customer ID acquisition unit 72 and receipt ID generated by the receipt ID generator 73 (assigns the customer ID and receipt ID) in the receipt data after XML conversion by the language converter 74. For easy assembly, the customer ID and receipt ID could be first converted to XML and then combined with the receipt data converted to XML.

The receipt ID supplier 76 sends the receipt ID generated by the receipt ID generator 73 to the mobile device 2 (electronic receipt management unit 62) using the wireless IC reader/writer 13. The electronic receipt management unit 62 then stores the received receipt ID with date information in a folder for referencing web receipts.

The address storage unit 77 stores the address of the management server 4. The address of a single management server 4, or addresses for multiple management servers 4, could be stored. If addresses for multiple management servers 4 are stored, all receipt data could be always sent to the plural addresses, or the addressee could be changed conditionally upon the time or day of the week that the receipt data is acquired, for example. The addressee could also be changed according to the result of analyzing the receipt data (based on the transaction total, purchased product, operator ID, or customer ID, for example). The output unit 78 outputs (uploads) the XML receipt data to the address of the management server 4 stored in the address storage unit 77.

The style sheet storage unit 79 stores a paper receipt style sheet describing the format of the paper receipt. The paper receipt style sheet is written in XSL or other markup language. When the receipt data is written in HTML, the paper receipt style sheet could be written in CSS.

The receipt production processor 80 converts the XML receipt data based on the stored paper receipt style sheet, and generates paper receipt data, which is print data for a paper receipt. Plural style sheets could be stored. In this implementation, the style sheet that is used could change conditionally according to the time or day that the receipt data is acquired, for example. The style sheet could also be changed according to the result of analyzing the receipt data (based on the transaction total, purchased product, operator ID, or customer ID, for example). The paper receipt data is preferably generated using commands that can be interpreted by the printer 3 (such as ESC/POS commands). The paper receipt data could also be written in XML (such as ESC/POS.XML) according to the printer 3 specifications (whether or not the printer 3 can interpret XML), or written in a non-XML language.

To produce a mobile receipt, the receipt production processor 80 uses the wireless IC reader/writer 13 to send the XML receipt data to the mobile device 2 (electronic receipt management unit 62). The customer ID and receipt ID could be included or not included in the receipt data.

The transmission unit 81 sends the paper receipt data generated by the receipt production processor 80 to the printer 3. If the printer 3 specifications are unknown, receipt data is generated and sent to the printer 3 in both XML and a non-XML language, and the printer 3 could discard the receipt data that it cannot use.

The main part of the printer 3 is the print unit 91. The print unit 91 prints the paper receipt data (in XML and/or a non-XML language) sent from the print control device 10 (transmission unit 81) on receipt paper (print medium).

The main parts of the management server 4 are an XML data storage unit 101 and web receipt generator 102. The XML data storage unit 101 is rendered by the XML database 41, and stores XML receipt data output from the print control device 10 (output unit 78).

The web receipt generator 102 is embodied by the web receipt production program 42, and based on the web receipt production information sent from the mobile device 2 (electronic receipt management unit 62), generates web receipt data based on the receipt data containing a customer ID set as as "web receipt: required," for example, and publishes the web receipt on the web.

The web receipt data is generated based on a web receipt style sheet previously stored in the web receipt production program 42. The web receipt style sheet is written in XSL or other markup language. If the receipt data is written in HTML, the web receipt style sheet may be written in CSS. Plural style sheets could also be stored and the style sheet that is used changed conditionally according to the POS terminal or store that output the receipt data, or the time or day that the receipt data was acquired. The style sheet could also be changed according to the result of analyzing the receipt data (based on the transaction total, purchased product, operator ID, or customer ID, for example).

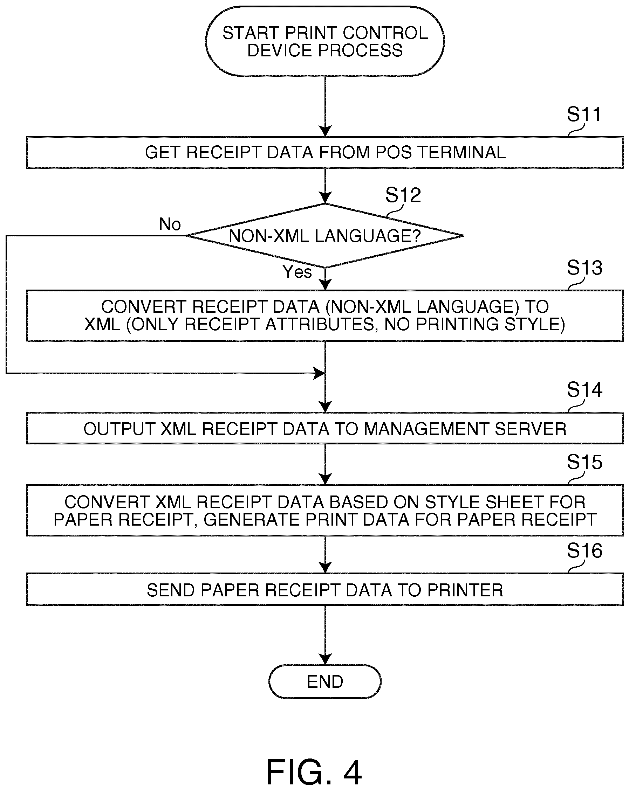

The operation of the print control device 10, mobile device 2, and management server 4 is described below with reference to FIG. 4 to FIG. 6. FIG. 4 is a flow chart of the print control device process.

When receipt data is received from the POS terminal 1 (S11), the print control device 10 determines if the receipt data is written in a non-XML language (S12). If the receipt data is in a non-XML language (S12 returns YES), the print control device 10 converts the receipt data to XML (S13). The resulting XML does not specify the printing style, and only describes receipt attributes. If the receipt data is not in a non-XML language (S12 returns NO), that is, receipt data written in XML was received from the POS terminal 1, step S13 is skipped.

The print control device 10 then outputs the XML receipt data to the management server 4 (S14). The print control device 10 also converts the XML receipt data based on a previously stored paper receipt style sheet and generates paper receipt data (S15). The print control device 10 then sends the resulting paper receipt data to the printer 3 (S16).

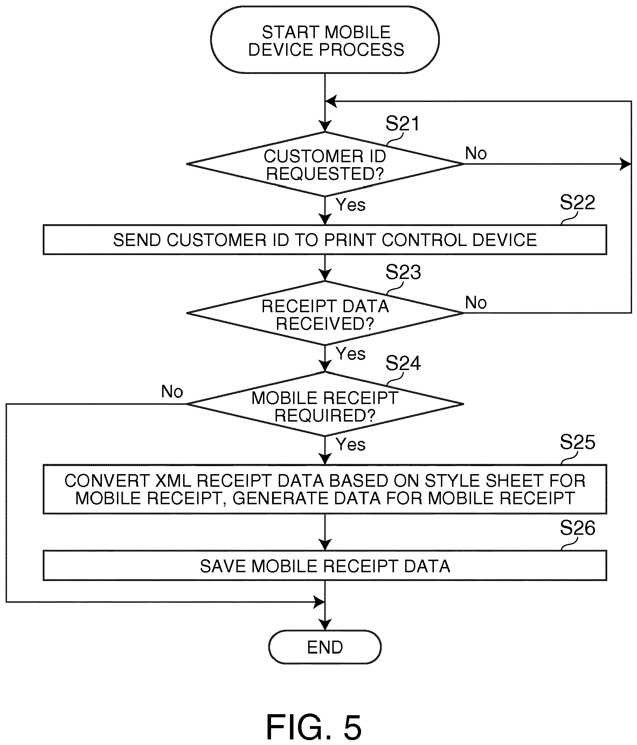

FIG. 5 is a flow chart of the mobile device process. When the customer ID is requested from the print control device 10 (S21 returns YES), the mobile device 2 (RF tag 22) sends the chip ID, which is information specific to the RF tag 22, as the customer ID to the print control device 10 (S22).

When receipt data is received from the print control device 10 (S23 returns YES), the mobile device 2 references the preset mobile receipt production information, and if a mobile receipt is required (S24 returns YES), converts the received XML receipt data based on the previously stored mobile receipt style sheet, and generates data for a mobile receipt (S25). The resulting mobile receipt data is also stored in a specific memory area in the mobile device 2 (S26).

If a mobile receipt is not required (S24 returns NO), steps S25 and S26 are omitted.

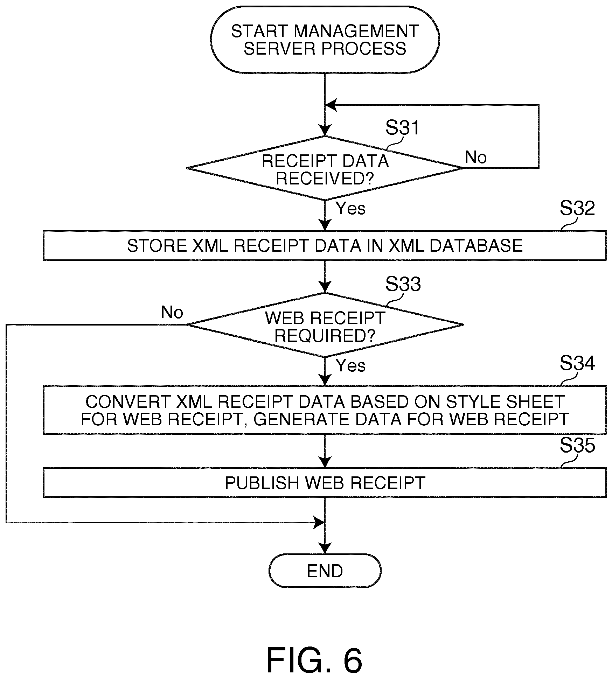

FIG. 6 is a flow chart of the management server process.

When receipt data (in XML) is received from the print control device 10 (S31 returns YES), the management server 4 saves the receipt data in the XML database 41 (S32). Based on the web receipt production information previously sent from the mobile device 2, the management server 4 determines whether or not to produce a web receipt (S33). If a web receipt is required (S33 returns YES), the management server 4 converts the received XML receipt data based on a previously stored web receipt style sheet, and generates data for a web receipt (S34). The management server 4 then publishes a web receipt based on the generated web receipt data on the web (S35).

If a web receipt is not required (S33 returns NO), steps S34 and S35 are skipped.

As described above, the print control device 10 according to the first embodiment of the invention outputs receipt data acquired from a POS terminal 1 as an XML document to the management server 4. More specifically, receipt data managed by plural retailers and vendors can be collected on the management server 4 in a common language without changing the POS terminal 1 (POS application 11), and sales information and customer purchasing activity can therefore be easily analyzed.

Because receipt data acquired from the POS terminal 1 that is written in a specific language other than XML is converted to XML, the invention is compatible with POS applications 11 that output XML and POS applications 11 that output in a non-XML language. Furthermore, because a markup language that does not depend on the operating system or application environment is used as the common language, editing using a style sheet is simple and handling the receipt data is simple.

Furthermore, because a customer ID is acquired from the mobile device 2 and embedded in the receipt data, the customer can easily view his personal purchasing history when a web receipt is produced, for example. Viewing receipts is therefore simple, and security is good because the receipts cannot be viewed by other people. Furthermore, because the customer ID identifies a particular individual, the purchasing activity of an individual can be easily analyzed from the receipt data stored on the management server 4.

In addition, because the print control device 10 generates a receipt ID that uniquely identifies receipt data, includes this receipt ID in the receipt data, and provides the receipt ID to the customer, the customer can view a particular receipt over a network when a web receipt is produced. As a result, the customer can easily view a particular web receipt without providing personal information such as a customer ID or e-mail address.

Furthermore, because the print control device 10 stores a paper receipt style sheet, data for a paper receipt can be easily generated from the XML receipt data.

The assembler 75 of the print control device 10 in the foregoing embodiment embeds a customer ID and receipt ID in the receipt data after XML conversion by the language converter 74, but these IDs could be embedded in the receipt data before XML conversion by the language converter 74 (in the XML receipt data when XML receipt data is output from the transaction processing unit 51).

The electronic receipt management unit 62 in the foregoing embodiment acquires XML receipt data from the print control device 10, and generates mobile receipt data based on a previously stored mobile receipt style sheet, but mobile receipt data could be acquired directly from the print control device 10 and stored. In this implementation, a mobile receipt style sheet is stored in the print control device 10, and the print control device 10 generates and supplies mobile receipt data to the mobile device 2.

The receipt ID supplier 76 supplies a receipt ID to the mobile device 2 in the foregoing embodiment, but could supply the receipt ID to a terminal other than the mobile device 2, such as the customer's home PC, or an IC card.

If supplied to another terminal, the address to which to send the receipt ID, such as the address of the PC, is stored in the electronic receipt management unit 62 and sent with the customer ID to the print control device 10. Further alternatively, an address table linking the customer ID and address to send the receipt ID could be previously stored in the print control device 10, and this address table referenced to determine where to send the receipt ID.

If supplied to an IC card, the receipt ID is stored in memory in the IC card. The customer then reads the receipt ID from the IC card to retrieve the web receipt.

Further alternatively, the receipt ID could be provided by printing the receipt ID on a paper receipt.

When the print control device 10 generates mobile receipt data, the mobile receipt data could be supplied to a terminal other than the mobile device 2, such as the customer's home PC, or an IC card. If supplied to an IC card, an ID (chip ID) specific to the IC card is used as the customer ID. Further alternatively, an address table linking the customer ID and address to send the mobile receipt data could be previously stored in the print control device 10, and this address table referenced to determine where to send the mobile receipt data.

If the print control device 10 does not generate mobile receipt data, the print control device 10 could supply XML receipt data to a terminal other than the mobile device 2 or an IC card. In this implementation, mobile receipt data is generated by the terminal other than the mobile device 2 or a terminal that can read the IC card. Further alternatively in this implementation, a style sheet for the mobile receipt may be stored in a terminal other than the mobile device 2, an IC card, or a terminal that can read an IC card.

Further alternatively, the electronic receipt management unit 62 of the mobile device 2 sends web receipt production information to the management server 4 (web receipt generator 102) in the above embodiment, but could be sent first with the customer ID and mobile receipt production information to the print control device 10. In this instance, the output unit 78 of the print control device 10 outputs the web receipt production information with the XML receipt data to the management server 4. The management server 4 then determines whether or not to produce a web receipt based on the received web receipt production information.

The receipt ID generator 73 in the above embodiment generates a receipt ID each time receipt data is acquired, but could omit generating a receipt ID if a web receipt is not required. In this instance, the customer ID acquisition unit 72 receives the web receipt production information with the customer ID.

The management server 4 in the above embodiment collects XML receipt data and produces web receipts, but these operations can be performed by separate servers. In this implementation, the XML receipt data is output to both servers.

A chip ID is used as the customer ID in the foregoing embodiment, but a member number, e-mail address, or other information stored in the mobile device 2 (or IC card) could be used.

The print control device 10 in the above embodiment uploads receipt data to the management server 4 in each transaction process, but the receipt data could be temporarily stored in a specific storage area in the print control device 10, and the receipt data then be batch uploaded from this specific storage area regularly or at a specific time, such as when a POS terminal 1 is closed out.

The receipt production processor 80 executes the paper receipt production process in each transaction process in the above embodiment, but the paper receipt production process could be executed conditionally (such as to produce a paper receipt only when the customer wants a paper receipt). Configurations that upload receipt data to the management server 4 only when a paper receipt is issued, only when an electronic receipt is issued, or only when both a paper receipt and an electronic receipt are issued, are also conceivable.

### Embodiment 2

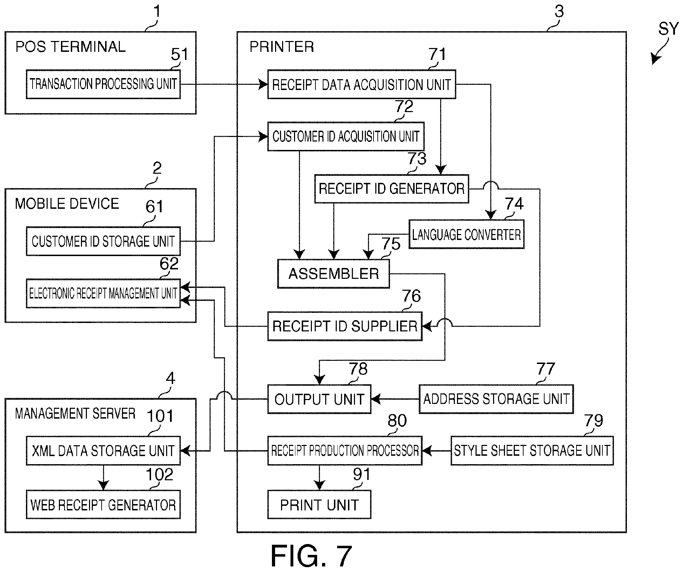

A second embodiment of the invention is described next with reference to FIG. 7. A print control device 10 between the POS terminal 1 and printer 3 uploads data to the receipt data management server 4 and generates paper receipt data in the first embodiment described above. The printer 3 performs these operations in this second embodiment.

More specifically, the print control device according to the invention is embodied in the printer 3 in this embodiment. The differences to the first embodiment are described below. Note that like parts are identified by the same reference numerals in this and the first embodiment, and further detailed description thereof is omitted. Variations that apply to the same parts in the first embodiment also apply in the same way in this embodiment.

FIG. 7 is a function block diagram of a receipt processing system SY according to the second embodiment of the invention. As shown in the figure, parts identified as 71 to 80 of the print control device 10 in the first embodiment are rendered in the printer 3 in this embodiment. The print unit 91 in this embodiment prints based on paper receipt data generated and output by the receipt production processor 80 (paper receipt production unit).

Though not specifically shown in the figure, the system configuration of this embodiment differs from the system configuration of the first embodiment shown in FIG. 1 in that the print control device 10 is omitted, and the printer 3 and management server 4 are connected by a computer network. The wireless IC reader/writer 13 is also included in the printer 3, and communicates with the mobile device 2 (RF tag 22).

As described above, electronic receipt information managed by plural retailers and vendors can be effectively used in the second embodiment by changing the printer 3 without modifying the POS terminal 1 (POS application 11) and without adding a print control device 10.

### Embodiment 3

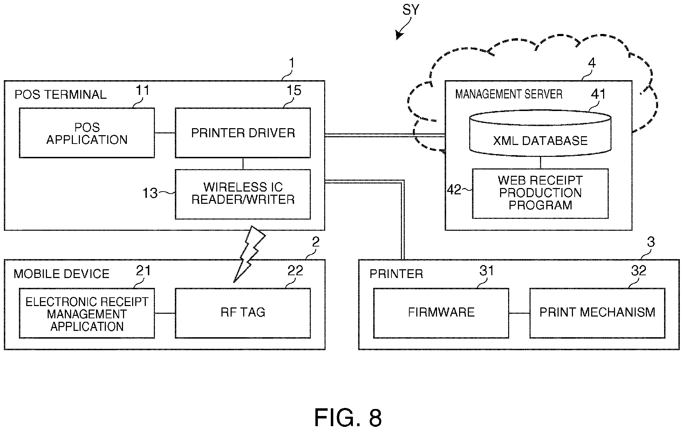

A third embodiment of the invention is described next with reference to FIG. 8. In this embodiment a printer driver 15 uploads receipt data to the management server 4 and generates paper receipt data. More specifically, this embodiment applies the print control device of the invention to the printer driver 15 of the POS terminal 1. The differences with the first embodiment are described below. Note that like parts are identified by the same reference numerals in this and the first embodiment, and further detailed description thereof is omitted.

FIG. 8 shows the configuration of a receipt processing system SY according to the third embodiment of the invention. As shown in the figure, the POS terminal 1 in this embodiment has a POS application 11, printer driver 15, and wireless IC reader/writer 13. The POS terminal 1 and management server 4, and the POS terminal 1 and printer 3, are connected to each other through specific networks. Though not specifically shown in the figure, parts 71 to 81 of the print control device 10 in the first embodiment shown in FIG. 2 are rendered in the printer driver 15. The transaction processing unit 51 has the function of the POS application 11.

As described above, electronic receipt information managed by plural retailers and vendors can be effectively used in the third embodiment by changing the printer driver 15 in the POS terminal 1 without modifying the POS application 11 and without adding a print control device 10.

Elements of the receipt processing system SY described in the above three embodiments can also be embodied as a computer executable program. This program can also be provided stored on a suitable recording medium, including CD-ROM and flash memory media.

The invention being thus described, it will be obvious that it may be varied in many ways. Such variations are not to be regarded as a departure from the scope of the invention, and all such modifications as would be obvious to one skilled in the art are intended to be included if they fall within the scope of the following claims.

## Claims

1. A print control device (10) connected to a POS terminal (1) through a dedicated cable or LAN, a printer (3) and a management server (4), the print control device comprising:
a receipt data acquisition unit (71) configured to acquire receipt data showing the result of a transaction process from the POS terminal (1), wherein the receipt data is one of receipt data written in a markup language, and print data written in a language different from the markup language;
wherein the print control device further comprises:
a language conversion unit (74) configured to, when the receipt data acquired by the receipt data acquisition unit (71) is written in the language different from the markup language, convert the receipt data written in the different language to a receipt data written in the markup language;
an address storage unit (77) configured to store an address of the management server (4);
a paper receipt production unit (80) configured to execute a paper receipt production process based on the receipt data acquired by the receipt data acquisition unit (71) and to generate a paper receipt data with command that can be interpreted by the printer (3), the paper receipt data being written in the markup language or being written in the language different from the markup language according to printer specification;
a transmission unit (81) configured to send the paper receipt data to the printer (3);
a receipt ID generating unit (73) configured to analyze the receipt data acquired by the receipt data acquisition unit (71) and to generate a receipt ID identifying the receipt data;
a receipt ID supply unit (76) configured to supply the receipt ID to a mobile device (2); and
a receipt ID assignment unit (75) configured to generate assigned receipt data by assigning the receipt ID to the receipt data written in the markup language; and
an output unit (78) configured to output the assigned receipt data to the address of the management server (4) when the paper receipt production unit executes the paper receipt production process.

2. The print control device described in claim 1, further comprising:
an electronic receipt production unit configured to execute an electronic receipt production process based on the receipt data acquired by the receipt data acquisition unit (71); and
wherein the output unit (78) is configured to output the receipt data written in the markup language to the address of the management server (4) when the paper receipt production unit or the electronic receipt production unit executes the receipt production process.

3. The print control device described in claim 1 or 2, further comprising:
a customer ID acquisition unit (72) configured to acquire a customer ID identifying a customer; and
a customer ID assignment unit configured to assign the customer ID to the receipt data written in the markup language.

4. The print control device described in any one of claims 1 to 3, further comprising:
a style sheet storage unit (79) configured to store a style sheet describing a format for a paper receipt;
wherein the paper receipt production unit is configured to convert receipt data written in the markup language based on the style sheet, and to generate the paper receipt data.

5. A printer comprising a print control device connected to a POS terminal (1) through a dedicated cable or LAN and connected to a management server (4),
the print control device comprising:
a receipt data acquisition unit (71) configured to acquire receipt data showing the result of a transaction process from the POS terminal (1),
wherein the receipt data is one of receipt data written in a markup language, and print data written in a language different from the markup language;
wherein the print control device further comprises:
a language conversion unit (74) configured to, when the receipt data acquired by the receipt data acquisition unit (71) is written in the language different from the markup language, convert the receipt data written in the different language to a receipt data written in the markup language;
an address storage unit (77) configured to store an address of the management server (4);
a paper receipt production unit (80) configured to execute a paper receipt production process based on the receipt data acquired by the receipt data acquisition unit (71) and to generate a paper receipt data with command that can be interpreted by the printer (3), the paper receipt data being written the markup language or being written in the language different from the markup language according to a printer specification;
a receipt ID generating unit (73) configured to analyze the receipt data acquired by the receipt data acquisition unit (71) and to generate a receipt ID identifying the receipt data;
a receipt ID supply unit (76) configured to supply the receipt ID to a mobile device (2);
a receipt ID assignment unit (75) configured generate assigned receipt data by assigning the receipt ID to the receipt data written in the markup language;
an output unit (78) configured to output the assigned receipt data to the address of the management server (4) when the paper receipt production unit executes the receipt production process; and
a print unit configured to print the print data output from the paper receipt production unit on a print medium.

6. A control method of a print control device connected to a POS terminal (1) through a dedicated cable or LAN, and connected to a printer (3) and a management server (4), the control method comprising steps of:
acquiring receipt data showing the result of a transaction process from the POS terminal (1), wherein the receipt data is one of receipt data written in markup language, and print data written in a language different from the markup language;
executing a paper receipt production process based on the acquired receipt data, the paper receipt production process comprising the steps of;
converting the receipt data, when the acquired receipt data is written in the language different from the markup language, to a receipt data written in the markup language;
generating a paper receipt data with command that can be interpreted by the printer (3), the paper receipt data being written in the markup language or written in the language different from the markup language according to printer specification;
sending the paper receipt data to the printer (3);
analyzing the acquired receipt data and generating a receipt ID identifying the receipt data;
supplying the receipt ID to a mobile device;
generating assigned receipt data by assigning the receipt ID to the receipt data written in the markup language; and
outputting the assigned receipt data, which is written in the markup language and to which the receipt ID is assigned, to a previously stored address of the management server (4).

7. The control method of a print control device described in claim 6, further comprising steps of:
executing an electronic receipt production process based on the acquired receipt data; and
outputting the receipt data in the markup language to the previously stored address of the management server (4) when the paper receipt or the electronic receipt production process is executed.

8. The control method of a print control device described in claim 6 or 7, further comprising steps of:
acquiring a customer ID identifying a customer; and
assigning the customer ID to the receipt data written in the markup language or to receipt data written in a language different from the markup language.

9. The control method of a print control device described in any one of claims 6 to 8, further comprising steps of:
storing a style sheet describing a format for a paper receipt;
sending a paper receipt data with command that can be interpreted by a printer; and
converting receipt data written in markup language based on the style sheet, and generating the paper receipt data.

## Patentansprüche

1. Drucksteuervorrichtung (10), die mit einem POS-Endgerät (1) durch ein dediziertes Kabel oder LAN, einem Drucker (3) und einem Managementserver (4) verbunden ist, wobei die Drucksteuervorrichtung umfasst:
eine Rechnungsdatenerlangungseinheit (71), die konfiguriert ist, Rechnungsdaten zu erlangen, die das Ergebnis eines Transaktionsprozesses von dem POS-Endgerät (1) zeigen, wobei die Rechnungsdaten eines von Rechnungsdaten, die in einer Markup-Sprache geschrieben sind, und Druckdaten, die in einer Sprache geschrieben sind, die sich von der Markup-Sprache unterscheidet, sind;
wobei die Drucksteuervorrichtung weiter umfasst:
eine Sprachenumwandlungseinheit (74), die konfiguriert ist, wenn die Rechnungsdaten, die durch die Rechnungsdatenerlangungseinheit (71) erlangt werden, in der Sprache geschrieben sind, die sich von der Markup-Sprache unterscheidet, die Rechnungsdaten, die in der anderen Sprache geschrieben sind, zu Rechnungsdaten umzuwandeln, die in der Markup-Sprache geschrieben sind;
eine Adressenspeichereinheit (77), die konfiguriert ist, eine Adresse des Managementservers (4) zu speichern;
eine Papierrechnungsproduktionseinheit (80), die konfiguriert ist, einen Papierrechnungsproduktionsprozess basierend auf den Rechnungsdaten auszuführen, die durch die Rechnungsdatenerlangungseinheit (71) erlangt werden, und Papierrechnungsdaten mit einem Befehl zu erzeugen, der vom Drucker (3) interpretiert werden kann, wobei die Papierrechnungsdaten gemäß Druckerspezifikation in der Markup-Sprache geschrieben sind oder in der Sprache geschrieben sind, die sich von der Markup-Sprache unterscheidet;
eine Übertragungseinheit (81), die konfiguriert ist, die Papierrechnungsdaten zum Drucker (3) zu senden;
eine Rechnungs-ID-Erzeugungseinheit (73), die konfiguriert ist, die Rechnungsdaten zu analysieren, die durch die Rechnungsdatenerlangungseinheit (71) erlangt werden, und eine Rechnungs-ID zu erzeugen, die die Rechnungsdaten identifiziert;
eine Rechnungs-ID-Zuleitungseinheit (76), die konfiguriert ist, die Rechnungs-ID zu einer mobilen Vorrichtung (2) zu leiten; und
eine Rechnungs-ID-Zuweisungseinheit (75), die konfiguriert ist, zugewiesene Rechnungsdaten durch Zuweisen der Rechnungs-ID zu den Rechnungsdaten, die in der Markup-Sprache geschrieben sind, zu erzeugen; und
eine Ausgabeeinheit (78), die konfiguriert ist, die zugewiesenen Rechnungsdaten an die Adresse des Managementservers (4) auszugeben, wenn die Papierrechnungsproduktionseinheit den Papierrechnungsproduktionsprozess ausführt.

2. Drucksteuervorrichtung nach Anspruch 1, weiter umfassend:
eine elektronische Rechnungsproduktionseinheit, die konfiguriert ist, einen elektronischen Rechnungsproduktionsprozess basierend auf den Rechnungsdaten auszuführen, die durch die Rechnungsdatenerlangungseinheit (71) erlangt werden; und
wobei die Ausgabeeinheit (78) konfiguriert ist, die Rechnungsdaten, die in der Markup-Sprache geschrieben sind, an die Adresse des Managementservers (4) auszugeben, wenn die Papierrechnungsproduktionseinheit oder die elektronische Rechnungsproduktionseinheit den Rechnungsproduktionsprozess ausführt.

3. Drucksteuervorrichtung nach Anspruch 1 oder 2, weiter umfassend:
eine Kunden-ID-Erlangungseinheit (72), die konfiguriert ist, eine Kunden-ID zu erlangen, die einen Kunden identifiziert; und
eine Kunden-ID-Zuweisungseinheit, die konfiguriert ist, die Kunden-ID den Rechnungsdaten zuzuweisen, die in der Markup-Sprache geschrieben sind.

4. Drucksteuervorrichtung nach einem der Ansprüche 1 bis 3, weiter umfassend
eine Formatvorlagenspeichereinheit (79), die konfiguriert ist, eine Formatvorlage zu speichern, die ein Format für eine Papierrechnung beschreibt;
wobei die Papierrechnungsproduktionseinheit konfiguriert ist, Rechnungsdaten, die in der Markup-Sprache geschrieben sind, basierend auf der Formatvorlage umzuwandeln und die Papierrechnungsdaten zu erzeugen.

5. Drucker, umfassend eine Drucksteuervorrichtung, die mit einem POS-Endgerät (1) durch ein dediziertes Kabel oder LAN verbunden ist und mit einem Managementserver (4) verbunden ist,
die Drucksteuervorrichtung umfassend:
eine Rechnungsdatenerlangungseinheit (71), die konfiguriert ist, Rechnungsdaten zu erlangen, die das Ergebnis eines Transaktionsprozesses von dem POS-Endgerät (1) zeigen,
wobei die Rechnungsdaten eines von Rechnungsdaten, die in einer Markup-Sprache geschrieben sind, und Druckdaten, die in einer Sprache geschrieben sind, die sich von der Markup-Sprache unterscheidet, sind;
wobei die Drucksteuervorrichtung weiter umfasst:
eine Sprachenumwandlungseinheit (74), die konfiguriert ist, wenn die Rechnungsdaten, die durch die Rechnungsdatenerlangungseinheit (71) erlangt werden, in der Sprache geschrieben sind, die sich von der Markup-Sprache unterscheidet, die Rechnungsdaten, die in der anderen Sprache geschrieben sind, zu Rechnungsdaten umzuwandeln, die in der Markup-Sprache geschrieben sind;
eine Adressenspeichereinheit (77), die konfiguriert ist, eine Adresse des Managementservers (4) zu speichern;
eine Papierrechnungsproduktionseinheit (80), die konfiguriert ist, einen Papierrechnungsproduktionsprozess basierend auf den Rechnungsdaten auszuführen, die durch die Rechnungsdatenerlangungseinheit (71) erlangt werden, und Papierrechnungsdaten mit einem Befehl zu erzeugen, der vom Drucker (3) interpretiert werden kann, wobei die Papierrechnungsdaten gemäß Druckerspezifikation in der Markup-Sprache geschrieben sind oder in der Sprache geschrieben sind, die sich von der Markup-Sprache unterscheidet;
eine Rechnungs-ID-Erzeugungseinheit (73), die konfiguriert ist, die Rechnungsdaten zu analysieren, die durch die Rechnungsdatenerlangungseinheit (71) erlangt werden, und eine Rechnungs-ID zu erzeugen, die die Rechnungsdaten identifiziert;
eine Rechnungs-ID-Zuleitungseinheit (76), die konfiguriert ist, die Rechnungs-ID zu einer mobilen Vorrichtung (2) zu leiten;
eine Rechnungs-ID-Zuweisungseinheit (75), die konfiguriert ist, zugewiesene Rechnungsdaten durch Zuweisen der Rechnungs-ID zu den Rechnungsdaten, die in der Markup-Sprache geschrieben sind, zu erzeugen;
eine Ausgabeeinheit (78), die konfiguriert ist, die zugewiesenen Rechnungsdaten an die Adresse des Managementservers (4) auszugeben, wenn die Papierrechnungsproduktionseinheit den Papierrechnungsproduktionsprozess ausführt; und
eine Druckeinheit, die konfiguriert ist, die Druckdaten, die von der Papierrechnungsproduktionseinheit ausgegeben werden, auf einem Druckmedium zu drucken.

6. Steuerverfahren einer Drucksteuervorrichtung, die mit einem POS-Endgerät (1) durch ein dediziertes Kabel oder LAN verbunden ist und mit einem Drucker (3) und einem Managementserver (4) verbunden ist, das Steuerverfahren umfassend Schritte zum:
Erlangen von Rechnungsdaten, die das Ergebnis eines Transaktionsprozesses von dem POS-Endgerät (1) zeigen, wobei die Rechnungsdaten eines von Rechnungsdaten, die in Markup-Sprache geschrieben sind, und Druckdaten, die in einer Sprache geschrieben sind, die sich von der Markup-Sprache unterscheidet, sind;
Ausführen eines Papierrechnungsproduktionsprozesses basierend auf den erlangten Rechnungsdaten, wobei der Papierrechnungsproduktionsprozess die Schritte umfasst zum:
Umwandeln der Rechnungsdaten, wenn die erlangten Rechnungsdaten in der Sprache geschrieben sind, die sich von der Markup-Sprache unterscheidet, zu Rechnungsdaten, die in der Markup-Sprache geschrieben sind;
Erzeugen von Papierrechnungsdaten mit einem Befehl, der vom Drucker (3) interpretiert werden kann, wobei die Papierrechnungsdaten gemäß Druckerspezifikation in der Markup-Sprache geschrieben sind oder in der Sprache geschrieben sind, die sich von der Markup-Sprache unterscheidet;
Senden der Papierrechnungsdaten zum Drucker (3);
Analysieren der erlangten Rechnungsdaten und Erzeugen einer Rechnungs-ID, die die Rechnungsdaten identifiziert;
Zuleiten der Rechnungs-ID zu einer Mobilvorrichtung;
Erzeugen zugewiesener Rechnungsdaten durch Zuweisen der Rechnungs-ID zu den Rechnungsdaten, die in der Markup-Sprache geschrieben sind;
Ausgeben der zugewiesenen Rechnungsdaten, die in der Markup-Sprache geschrieben sind und denen die Rechnungs-ID zugewiesen ist, an eine zuvor gespeicherte Adresse des Managementservers (4).

7. Steuerverfahren einer Drucksteuervorrichtung nach Anspruch 6, weiter umfassend Schritte zum:
Ausführen eines elektronischen Rechnungsproduktionsprozesses basierend auf den erlangten Rechnungsdaten; und
Ausgeben der Rechnungsdaten in der Markup-Sprache an die zuvor gespeicherte Adresse des Managementservers (4), wenn der Papierrechnungs- oder der elektronische Rechnungsproduktionsprozess ausgeführt wird.

8. Steuerverfahren einer Drucksteuervorrichtung nach Anspruch 6 oder 7, weiter umfassend Schritte zum:
Erlangen einer Kunden-ID, die einen Kunden identifiziert; und
Zuweisen der Kunden-ID zu den Rechnungsdaten, die in der Markup-Sprache geschrieben sind, oder zu Rechnungsdaten, die in einer Sprache geschrieben sind, die sich von der Markup-Sprache unterscheidet.

9. Steuerverfahren einer Drucksteuervorrichtung nach einem der Ansprüche 6 bis 8, weiter umfassend Schritte zum:
Speichern einer Formatvorlage, die ein Format für eine Papierrechnung beschreibt;
Senden von Papierrechnungsdaten mit einem Befehl, der von einem Drucker interpretiert werden kann; und
Umwandeln von Rechnungsdaten, die in Markup-Sprache geschrieben sind, basierend auf der Formatvorlage und Erzeugen der Papierrechnungsdaten.

## Revendications

1. Dispositif de commande d'impression (10) connecté à un terminal de point de vente, POS (1) au travers d'un câble ou d'un réseau local, LAN, dédié, à une imprimante (3) et à un serveur de gestion (4), le dispositif de commande d'impression comprenant :
une unité d'acquisition de données de reçu (71) configurée pour acquérir des données de reçu montrant le résultat d'un processus de transaction à partir du terminal POS (1), dans lequel les données de reçu sont des données parmi des données de reçu écrites dans un langage de balisage et des données d'impression écrites dans un langage différent du langage de balisage ;
dans lequel le dispositif de commande d'impression comprend en outre :
une unité de conversion de langage (74) configurée pour, lorsque les données de reçu acquises par l'unité d'acquisition de données de reçu (71) sont écrites dans le langage différent du langage de balisage, convertir les données de reçu écrites dans le langage différent en données de reçu écrites dans le langage de balisage ;
une unité de stockage d'adresse (77) configurée pour stocker une adresse du serveur de gestion (4) ;
une unité de production de reçu papier (80) configurée pour exécuter un processus de production de reçu papier sur la base des données de reçu acquises par l'unité d'acquisition de données de reçu (71) et pour générer des données de reçu papier avec une instruction qui peut être interprétée par l'imprimante (3), les données de reçu papier étant écrites dans le langage de balisage ou écrites dans le langage différent du langage de balisage en fonction d'une spécification de l'imprimante ;
une unité d'émission (81) configurée pour envoyer les données de reçu papier à l'imprimante (3) ;
une unité de génération d'identifiant, ID, de reçu (73) configurée pour analyser les données de reçu acquises par l'unité d'acquisition de données de reçu (71) et pour générer un ID de reçu identifiant les données de reçu ;
une unité de fourniture d'ID de reçu (76) configurée pour fournir l'ID de reçu à un dispositif mobile (2) ; et
une unité d'attribution d'ID de reçu (75) configurée pour générer des données attribuées de reçu par l'attribution de l'ID de reçu aux données de reçu écrites dans le langage de balisage ; et
une unité de sortie (78) configurée pour délivrer en sortie les données attribuées de reçu à l'adresse du serveur de gestion (4) lorsque l'unité de production de reçu papier exécute le processus de production de reçu papier.

2. Dispositif de commande d'impression selon la revendication 1, comprenant en outre :
une unité de production de reçu électronique configurée pour exécuter un processus de production de reçu électronique sur la base des données de reçu acquises par l'unité d'acquisition de données de reçu (71) ; et
dans lequel l'unité de sortie (78) est configurée pour délivrer en sortie les données de reçu écrites dans le langage de balisage à l'adresse du serveur de gestion (4) lorsque l'unité de production de reçu papier ou l'unité de production de reçu électronique exécute le processus de production de reçu.

3. Dispositif de commande d'impression selon la revendication 1 ou 2, comprenant en outre :
une unité d'acquisition d'ID de client (72) configurée pour acquérir un ID de client identifiant un client ; et
une unité d'attribution d'ID de client configurée pour attribuer l'ID de client aux données de reçu écrites dans le langage de balisage.

4. Dispositif de commande d'impression selon l'une quelconque des revendications 1 à 3, comprenant en outre : une unité de stockage de feuille de style (79) configurée pour stocker une feuille de style décrivant un format pour un reçu papier ;
dans lequel l'unité de production de reçu papier est configurée pour convertir des données de reçu écrites dans le langage de balisage sur la base de la feuille de style, et pour générer les données de reçu papier.

5. Imprimante comprenant un dispositif de commande d'impression connecté à un terminal POS (1) au travers d'un câble ou d'un réseau local dédié et connecté à un serveur de gestion (4),
le dispositif de commande d'impression comprenant :
une unité d'acquisition de données de reçu (71) configurée pour acquérir des données de reçu montrant le résultat d'un processus de transaction à partir du terminal POS (1),
dans lequel les données de reçu sont des données parmi des données de reçu écrites dans un langage de balisage et des données d'impression écrites dans un langage différent du langage de balisage ;
dans lequel le dispositif de commande d'impression comprend en outre :
une unité de conversion de langage (74) configurée pour, lorsque les données de reçu acquises par l'unité d'acquisition de données de reçu (71) sont écrites dans le langage différent du langage de balisage, convertir les données de reçu écrites dans le langage différent en données de reçu écrites dans le langage de balisage ;
une unité de stockage d'adresse (77) configurée pour stocker une adresse du serveur de gestion (4) ;
une unité de production de reçu papier (80) configurée pour exécuter un processus de production de reçu papier sur la base des données de reçu acquises par l'unité d'acquisition de données de reçu (71) et pour générer des données de reçu papier avec une instruction qui peut être interprétée par l'imprimante (3), les données de reçu papier étant écrites dans le langage de balisage ou écrites dans le langage différent du langage de balisage en fonction d'une spécification de l'imprimante ;
une unité de génération d'identifiant, ID, de reçu (73) configurée pour analyser les données de reçu acquises par l'unité d'acquisition de données de reçu (71) et pour générer un ID de reçu identifiant les données de reçu ;
une unité de fourniture d'ID de reçu (76) configurée pour fournir l'ID de reçu à un dispositif mobile (2) ;
une unité d'attribution d'ID de reçu (75) configurée générer des données attribuées de reçu par l'attribution de l'ID de reçu aux données de reçu écrites dans le langage de balisage ;
une unité de sortie (78) configurée pour délivrer en sortie les données attribuées de reçu à l'adresse du serveur de gestion (4) lorsque l'unité de production de reçu exécute le processus de production de reçu papier ; et
une unité d'impression configurée pour imprimer les données d'impression délivrées en sortie de l'unité de production de reçu papier sur un support d'impression.

6. Procédé de commande d'un dispositif de commande d'impression connecté à un terminal POS (1) au travers d'un câble ou d'un réseau local dédié et connecté à une imprimante (3) et à un serveur de gestion (4), le procédé de commande comprenant les étapes de :
l'acquisition de données de reçu montrant le résultat d'un processus de transaction à partir du terminal POS (1), dans lequel les données de reçu sont des données parmi des données de reçu écrites dans un langage de balisage et des données d'impression écrites dans un langage différent du langage de balisage ;
l'exécution d'un processus de production de reçu papier sur la base des données de reçu acquises, le processus de production de reçu papier comprenant les étapes de ;
la conversion des données de reçu, lorsque les données de reçu acquises sont écrites dans le langage différent du langage de balisage, en données de reçu écrites dans le langage de balisage ;
la génération de données de reçu papier avec une instruction qui peut être interprétée par l'imprimante (3), les données de reçu papier étant écrites dans le langage de balisage ou écrites dans le langage différent du langage de balisage en fonction d'une spécification de l'imprimante ; l'envoi des données de reçu papier à l'imprimante (3) ;
l'analyse des données de reçu acquises et la génération d'un ID de reçu identifiant les données de reçu ;
la fourniture de l'ID de reçu à un dispositif mobile ;
la génération de données attribuées de reçu par l'attribution de l'ID de reçu aux données de reçu écrites dans le langage de balisage ; et
la sortie des données attribuées de reçu, qui sont écrites dans le langage de balisage et auxquelles l'ID de reçu est attribué, vers une adresse précédemment stockée du serveur de gestion (4).

7. Procédé de commande d'un dispositif de commande d'impression selon la revendication 6, comprenant en outre les étapes de :
l'exécution d'un processus de production de reçu électronique sur la base des données de reçu acquises ; et
la sortie des données de reçu dans le langage de balisage vers l'adresse précédemment stockée du serveur de gestion (4) lorsque le processus de production de reçu papier ou de reçu électronique est exécuté.

8. Procédé de commande d'un dispositif de commande d'impression selon la revendication 6 ou 7, comprenant en outre les étapes de :
l'acquisition d'un ID de client identifiant un client ; et
l'attribution de l'ID de client aux données de reçu écrites dans le langage de balisage ou aux données de reçu écrites dans un langage différent du langage de balisage.

9. Procédé de commande d'un dispositif de commande d'impression selon l'une quelconque des revendications 6 à 8, comprenant en outre les étapes de :
stockage d'une feuille de style décrivant un format pour un reçu papier ;
l'envoi de données de reçu papier avec une instruction qui peut être interprétée par une imprimante ; et
la conversion des données de reçu écrites dans le langage de balisage sur la base de la feuille de style, et la génération des données de reçu papier.
